Europäisches Patentamt

European Patent Office

Office européen des brevets

(19)

(11) Veröffentlichungsnummer : **0 185 167**
**B1**

(12) **EUROPÄISCHE PATENTSCHRIFT**

(45) Veröffentlichungstag der Patentschrift :
03.01.90

(21) Anmeldenummer : 85113429.6

(22) Anmeldetag : 23.10.85

(51) Int. Cl.⁵ : **G 01 B 11/02**, G 01 B 11/24,
G 01 B 11/30

(54) Optisch-elektronisches Messverfahren, eine dafür erforderliche Einrichtung und deren Verwendung.

(30) Priorität : 20.12.84 CH 6071/84

(43) Veröffentlichungstag der Anmeldung :
25.06.86 Patentblatt 86/26

(45) Bekanntmachung des Hinweises auf die Patenterteilung : 03.01.90 Patentblatt 90/01

(84) Benannte Vertragsstaaten :
AT BE DE FR GB IT LU NL SE

(56) Entgegenhaltungen :
EP--A-- 0 022 237
DE--A-- 2 613 224
DE--A-- 3 100 550
FR--A-- 2 259 349
US--A-- 3 812 376
US--A-- 3 937 580
US--A-- 3 941 484
US--A-- 4 131 365

(73) Patentinhaber : GEORG FISCHER AKTIENGESELLS-
CHAFT
Mühlentalstrasse 105
CH-8201 Schaffhausen (CH)

(72) Erfinder : Ring, Manfred
Höhenweg 26
D-7760 Radolfzell (DE)
Erfinder : Weber, Jürgen
Oedenweg 9
D-2000 Hamburg (DE)
Erfinder : Ackermann, Helmut
Lütjenburger-Weg 26
D-2000 Norderstedt (DE)

EP 0 185 167 B1

**Beschreibung**

Die Erfindung betrifft ein optisch-elektronisches Messverfahren zum Prüfen von Teilen, wie es im Oberbegriff von Anspruch 1 gekennzeichnet ist, eine zur Durchführung des Verfahrens erforderliche Einrichtung gemäss dem Oberbegriff von Anspruch 6 und deren Verwendung.

Berührungsfreie optisch-elektronische Messverfahren zur Prüfung bzw. Messung von Teilen bzw. Werkstücken sind bekannt, wobei meist das durch eine Lichtquelle erzeugte Schattenbild eines Werkstückes abgebildet und die in Sensoren erzeugten elektrischen Signale für die Messung ausgewertet werden.

Die mit diesem Messverfahren erreichbare Messgenauigkeit ist meist nicht ausreichend. Ausserdem werden bei derartigen Messverfahren genau einzuhaltende Distanzen zwischen Lichtquelle, Werkstück und Sensor verlangt. Dies wirkt sich insofern nachteilig auf die Messgenauigkeit aus, wenn die geforderten hohen Herstell- und Montagegenauigkeiten nicht eingehalten werden können oder sich diese Masse durch Umwelteinflüsse wie z. B. Temperaturänderungen oder Erschütterungen während des Betriebs verändern. Auch beim Verschieben der Messeinrichtung längs des zu messenden Werkstückes muss diese erforderliche Genauigkeit eingehalten werden können. Als weiterer Nachteil ist für eine genaue Messung ein hohes Auflösungsvermögen des Sensors erforderlich, wobei mit den z.Z. herstellbaren, und nicht dieses Auflösungsvermögen aufweisenden, Sensoren dieses durch eine Kompensation in der Auswertung z.T. ausgeglichen werden kann, wodurch jedoch die Sicherheit des Messergebnisses verringert wird.

Ein Verfahren und eine Einrichtung der eingangs genannten Art ist durch die EP-A-0 022 237 bekanntgeworden, bei welchem eine Umrisskante eines in einem Prisma angeordneten rotationssymetrischen Körpers mit kohärentem Licht beleuchtet und das am Körper vorbeigehende Licht unter Zwischenschaltung einer Vergrösserungsoptik auf eine Sensorfläche eines lichtempfindlichen Sensors reell abgebildet wird. Das bei dieser Abbildung auf der Sensorfläche entstehende Beugungsbild wird ausgewertet. Damit die gewünschte Mess-Genauigkeit erreicht wird, ist eine Vergrösserungsoptik für das entstehende Beugungsbild erforderlich, welche wiederum eine Verschiebung des Körpers und der Sensoren in Längsrichtung (Y-Richtung) des Lichtstrahles erfordert. Zur Messung von im Durchmesser unterschiedlichen Körpern ist deren Verschiebung quer zum Lichtstrahl in X-Richtung erforderlich.

Dieses Gerät ist weder zur genauen Messung von Durchmessern noch zur Prüfung der Rundheit von rotationssymmetrischen Körpern geeignet.

Mit der in der US-A-3 812 376 gezeigten optisch-elektronischen Messeinrichtung ist zwar der Durchmesser eines Drehteiles direkt auf der Drehmaschine bestimmbar, jedoch ist es mit dieser Einrichtung nicht möglich, zweidimensionale Beugungsbilder aufzunehmen und so ganze Objektkonturen zu erfassen und Längsdistanzen zu messen.

Die US-A-4 131 365 zeigt ein opto-elektrisches Messverfahren zur Messung von Werkstücken mittels eines Beugungsbildes, wobei dieses Messverfahren als Lichtquelle einen feinen Laser-Lichtstrahl mit einem gaussischen Intensitätsprofil erfordert. Die Auswertung des Beugungsbildes entspricht ebenfalls nicht dem im Oberbegriff von Anspruch 1 angeführten Messverfahren.

Ausserdem ist in dieser Schrift keine dem Oberbegriff des Einrichtungsanspruches 6 entsprechende Einrichtung beschrieben, mittels welcher eine betriebsmässige Prüfung von Durchmessern, Längenmassen, Konturen und Rundheit eines vorzugsweise rotationssymmetrischen Werkstückes möglich ist.

Aufgabe der vorliegenden Erfindung ist die Schaffung eines Verfahrens der eingangs genannten Art, welches unter Vermeidung der angeführten Nachteile der bekannten Verfahren, trotz einer Messgenauigkeit im Mikron-Bereich eine vielseitige Anwendbarkeit wie zum Messen von Durchmessern und Längendistanzen sowie zum Prüfen von Konturen und Rundheit an Teilen gewährleistet. Die dafür erforderliche Einrichtung soll trotz einfachem Aufbau der Messoptik einen grossen Messbereich bei gleichbleibend hoher Messgenauigkeit ermöglichen.

Erfindungsgemäss wird dies durch die kennzeichnenden Merkmale des Verfahrensanspruches 1, des Einrichtungsanspruches 6 und des Verwendungsanspruches 14 erreicht.

Besonders vorteilhafte Ausgestaltungen der Erfindung sind in den davon abhängigen Ansprüchen gekennzeichnet.

Durch die direkte Aufnahme des mittels eines parallelen Laserlichtstrahles erzeugten Beugungsbildes durch Diodenzeilen und die Auswertung durch einen Rechner ist auch ohne eine Vergrösserungsoptik und Verschiebbarkeit der Diodenzeile in Richtung des Lichtstrahles (Y-Richtung) eine genaue Bestimmung der Lage der Kante des zu messenden Teiles gewährleistet.

Dies wird durch ein spezielles Rechnerprogramm erreicht, bei welchem sich aus der Korrelation eines theoretischen und des gemessenen Beugungsbildes ergebende Grössen der Berechnung zugrunde gelegt werden, wobei die Maximal- und Minimalwerte der Lichtintensität des Beugungsbildes sowie deren Durchgangspunkte durch die mittlere Lichtintensität für die Berechnung ermittelt werden.

Durch die Anordnung von Zeilensensoren in zwei Zeilenreihen, wobei jedem Zeilensensor eine Laser-Lichtquelle zugeordnet ist, wird der Messbereich erweitert. Dadurch wird auch zur genauen Durchmessermessung die gleichzeitige Bestimmung der Lage der oberen und unteren Objektkante ermöglicht, wobei diese Messung auch durch die Aufnahme des zu prüfenden Teiles zwischen einem Spindelstock und einem Reitstock ermöglicht wird.

Durch die DE-A-3 100 550 ist zwar zur Vergrösserung des Messbereiches eine ladungsgekoppelte doppelreihige Sensorenzeilenanordnung bekanntgeworden, wobei diese für eine Längenmessung mit nur einer Lichtquelle vorgesehen ist. Diese beiden Sensoren-Reihen müssen deshalb miteinander verschaltet sein, was eine aufwendige elektronische Schaltung erfordert und nicht der Anordnung gemäss Anspruch 6 entspricht.

Durch die erfindungsgemässe Einrichtung werden alle Anforderungen erfüllt, welche bei der Prüfung von Teilen bzw. Werkstücken in einer automatischen Fertigung an diese gestellt werden. Diese Anforderungen sind :

Berührungsloses Messen von Durchmessern, Längenmassen, Rundheit und der Konturverlauf

kurze Messzeiten (wenige Sekunden)

grosser Messbereich bzw. Flexibilität, d. h. kurze Umrüstzeiten

eine geringe Messunsicherheit (wenige Mikrometer)

kurze Auswertzeiten, damit die Werkzeuge zeitnah nachgestellt werden können.

Die Erfindung ist in den Zeichnungen beispielsweise dargestellt und nachfolgend beschrieben.

Es zeigen :

Fig. 1 eine schematische Darstellung des Messverfahrens

Fig. 2 den Lichtintensitätsverlauf beim Beugungsbild

Fig. 3 eine schematische Anordnung der Sensoren in Bezug zu einem zu messenden Teil

Fig. 4 die Beugungsbilder bei einer Durchmesser-Messung wie bei einem in Fig. 3 dargestellten Teil

Fig. 5 ein Blockschaltbild der Messeinrichtung und

Fig. 6 eine Ausführungsvariante einer Messeinrichtung.

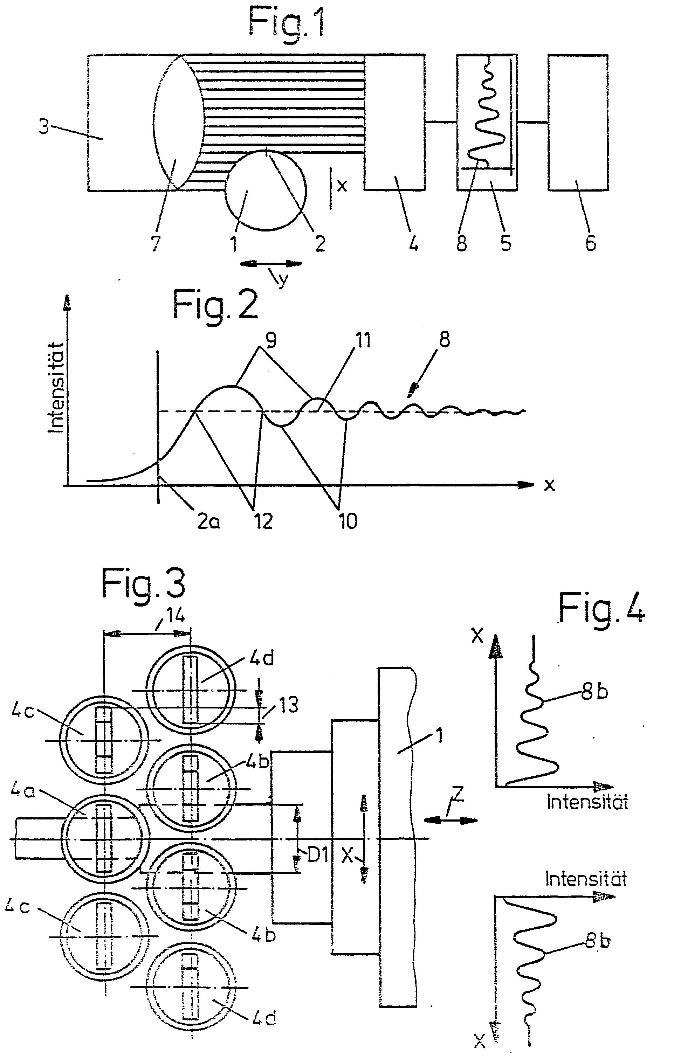

Die in Fig. 1 dargestellte Messanordnung zeigt ein zu prüfendes Teil 1 mit einer Kante 2, welches zwischen einer Lichtquelle 3 und einem Sensor 4 angeordnet ist. Die entsprechend dem Beugungsbild im Sensor 4 erzeugten elektrischen Signale 5 werden einer Auswerteinrichtung 6 zugeleitet, in welcher die Lage und/oder Kontur bzw. Verlauf der Kante 2 berechnet wird. Die kohärente und monochromatische Lichtquelle 3 ist vorzugsweise eine Laserdiode, deren Strahlung durch ein Linsensystem 7 aufgeweitet und parallelgerichtet wird. Vorzugsweise wird für das Linsensystem 7 ein Achromat verwendet. Noch geringe Abbildungsfehler (Aberation) eines Achromaten können durch Korrekturprogramme im Rechner weitgehend beseitigt werden. Zur Bestimmung des Verlaufs der Kante 2 ist ein zweidimensionales Beugungsbild erforderlich.

Hierfür kann ein Flächensensor (CCD-Matrixkamera) verwendet werden. Beim heutigen Stand der Technik ist jedoch die Auflösung bzw. der sich daraus ergebende Messbereich ungenügend. Vorteilhafter ist ein Zeilensensor 4, welcher in der Z-Achse (Fig. 3) während des Messens relativ zum messenden Teil verschoben wird. Ein derartiger Zeilensensor weist meist einen mehr als dreifachen Messbereich gegenüber einem Flächensensor auf und es sind zeilenförmig genügend viele Dioden angeordnet, um auch die Beugungsstreifen höherer Ordnung deutlich voneinander zu trennen. Die Lichtempfindlichkeit der einzelnen Dioden des Zeilensensors 4 schwankt bis zu 10 %, wodurch die Bildauswertung erschwert und das Messergebnis verfälscht werden kann. Dies wird jedoch im Vorwege korrigiert, indem pro Diode zwei Parameter ermittelt, gespeichert und bei der Auswertung mittels einer schnellen Elektronik, der Pixelkorrektur, kompensiert werden.

Fig. 2 zeigt das im Zeilensensor 4 aufgenommene und durch das Licht an der Kante 2 entstehende Beugungsbild 8, wobei die Lichtintensität des Beugungsbildes in Richtung der X-Achse dargestellt ist. Das Beugungsbild 8 weist Maximalwerte 9 und Minimalwerte 10 sowie Durchgangspunkte 12 auf, welche auf einer mittleren Lichtintensitätslinie 11 liegen. Der gesamte Verlauf der Lichtintensität des Beugungsbildes 8, insbesonders aber die Maxima 9, die Minima 10 und die Durchgangspunkte 12 gemäss Fig. 2 werden ausgewertet, wobei diese Werte und ein theoretisch berechnetes oder durch Simulation gewonnenes und gespeichertes Beugungsbild der Berechnung der Lage und Kontur der zu prüfenden Kante zugrunde gelegt wird. Bei der Berechnung findet eine Korrelation des theoretischen Beugungsbildes mit dem gemessenen Beugungsbild statt. Das theoretische Beugungsbild wird mit den bekannten Formeln wie sie z. B. aus der Literaturstelle : « M. Born, E. Wolf : Principles of Optics, Pergamon Press, Oxford 1975 », zu entnehmen sind, berechnet und in die Rechenspeicher eingegeben. In Fig. 2 ist die berechnete Lage der Kante 2 mit 2a angegeben.

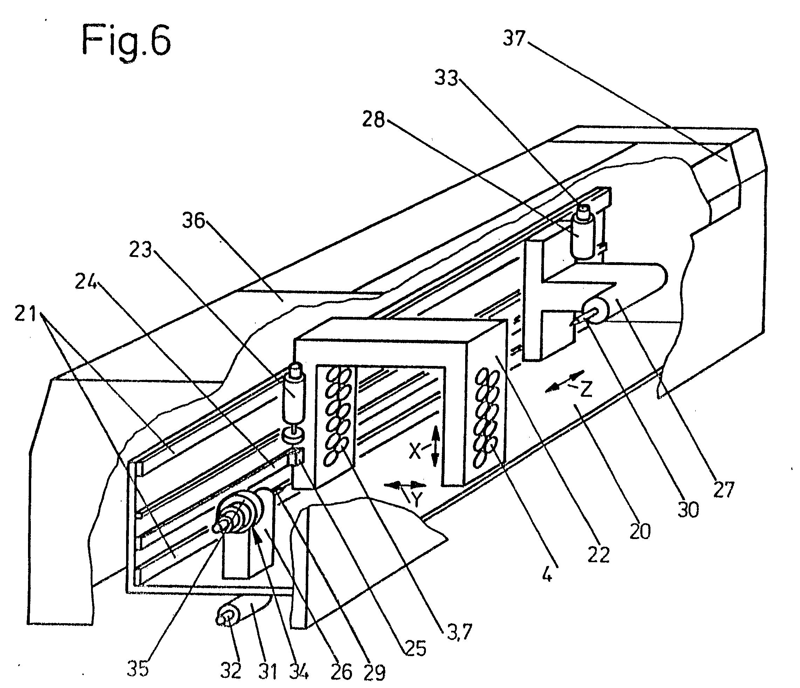

Fig. 3 zeigt eine Anordnung von Zeilensensoren 4 wie sie zur Vergrösserung des Messbereiches bei der zur Fig. 6 später beschriebenen Messeinrichtung verwendet wird. Hierbei sind mehrere Zeilensensoren 4 dabei in zwei Zeilenreihen hintereinander so angeordnet, dass eine gegenseitige Ueberlappung 13 mehrerer Dioden in Zeilenrichtung, welche in der X-Koordinate verläuft, gegeben ist. Vorzugsweise ist dabei jedem Zeilensensor 4 eine Lichtquelle 3 zugeordnet. Im gezeigten Beispiel sind sieben Zeilensensoren 4 angeordnet, wobei der Sensor 4a einen ersten Messbereich, die beiden Sensoren 4b einen zweiten Messbereich, die beiden Sensoren 4c einen dritten Messbereich und die beiden Sensoren 4d einen vierten Messbereich aufweisen. Die beiden Zeilenreihen weisen in Richtung der Z-Achse eine feste einprogrammierte Distanz 14 auf. Der jeweils maximale Messbereich ist durch die Durchmesser des stufenförmig ausgebildeten rotationssymmetrischen Teiles 1 dargestellt. Bei diesem Teil 1 wird z. B. der Durchmesser D1 mittels den beiden Zeilensensoren 4b gemessen, wobei die in Fig. 4 gezeigten Beugungsbilder 8b abgebildet und daraus der effektive Durchmesser des Teiles berechnet wird.

Fig. 6 zeigt ein Ausführungsbeispiel einer Messeinrichtung. Ein Gestell 20 ist mit Führungen 21 versehen, an welchem ein Schlitten 22 in der Z-Achse verschiebbar angeordnet ist. An dem U-förmigen Schlitten 22 sind jeweils in der Y-Achse gegenüberliegend auf einem Schenkel die Zeilensensoren 4 und auf dem anderen Schenkel die Lichtquellen 3 mit dem Linsensystem 7 angeordnet. Der Schlitten 22 weist einen NC-gesteuerten Antrieb 23 auf, wobei die genaue Lage des Schlittens in der Z-Achse mittels eines Längenmassstabs 24 und eines Weggebers 25 bestimmbar ist. Eine Aufnahmeeinrichtung für das zu prüfende Teil besteht aus einem Spindelstock 26 und aus einem, einen Zustellantrieb 28 mit Winkelgeber 33 aufweisenden, Reitstock 27, wobei das Teil zwischen Spitzen 29, 30 gehalten wird. Die Spitze 29 am Spindelstock 26 ist mittels eines Drehantriebes 31 antreibbar, wobei dieser für genaue Winkelpositionen mit einem Winkelgeber 32 versehen ist. Koaxial zur Spitze 29 ist am Spindelstock 26 ein Referenzkörper 34 angeordnet, welcher noch im Verfahrbereich der Sensoren 4 liegt. Der Referenzkörper 34 besteht aus mehreren im Durchmesser unterschiedlichen Zylinderscheiben 35, wobei jedem durch die Anordnung der Zeilensensoren 4a, 4b, 4c, 4d (Fig. 3) gegebenen Messbereich zwei unterschiedliche Referenzdurchmesser zugeordnet sind. Mit dem Referenzkörper 34 kann das Messsystem an den Durchmessern und den Planflächen zwischen den Messungen je nach Bedarf überprüft bzw. neu geeicht werden. Der Referenzkörper 34 kann auch wahlweise mit dem Drehantrieb 31 angetrieben werden, wodurch zur Referenzmessung bei Störmessungen durch Schmutz neue saubere Messorte eingestellt werden können. Die gesamte Einrichtung ist mit einer Abdeckhaube 36 zur Abschirmung äusserer Einflüsse wie z. B. Streulicht, Schmutz usw. versehen, wobei die Beschickung mit Teilen durch eine mit einer Klappe 37 versehene Oeffnung erfolgt. Innerhalb der Abdeckung wird vorteilhafterweise ein Ueberdruck z. B. mittels eines Gebläses erzeugt, damit das Eindringen von Schmutz und Staub weitgehend verhindert wird.

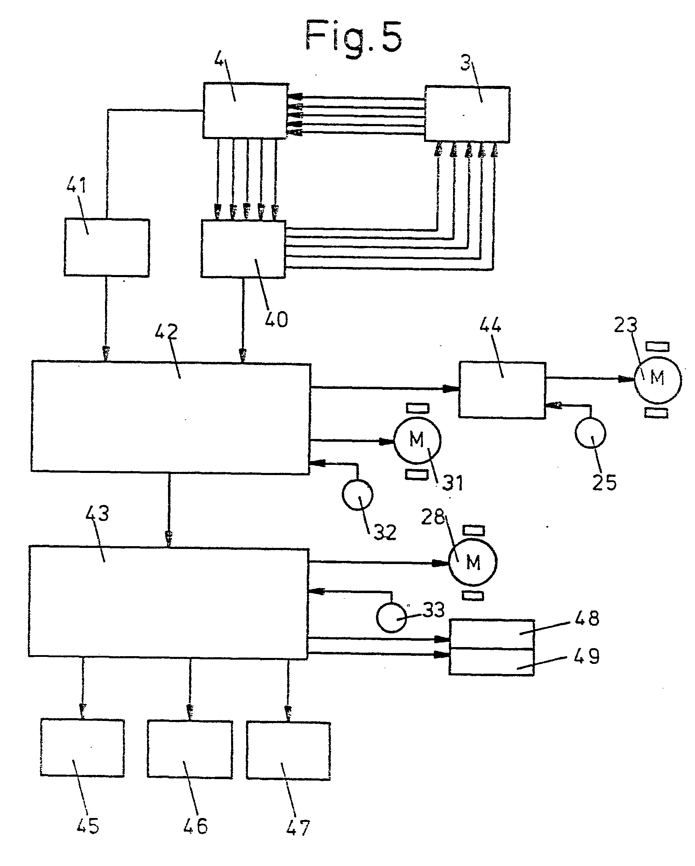

Fig. 5 zeigt ein Blockschaltbild für die vorgängig beschriebene Messeinrichtung. Die Sensoren 4 und die Lichtquellen 3 sind einerseits über einen Analog-Digital-Wandler 41 und andererseits über eine Messbereichssteuerung 40 mit einem Messrechner 42 — oder auch Interfacerechner genannt — wirkverbunden. Mit diesem ist ebenfalls der Verschiebeantrieb 23 mit dem Weggeber 25 über eine Steuerung 44 und der Drehantrieb 31 mit dem Winkelgeber 32 wirkverbunden. Mit dem Messrechner 42 ist ein Auswertrechner 43 — auch Analyse-Rechner genannt — verbunden, welcher eine Wirkverbindung mit dem Zustellantrieb 28 für den Reitstock 27 und dessen Winkelgeber 33 aufweist. Ausserdem sind an dem Auswertrechner 43 Auswert- Anzeige- und Bedienungsgeräte 45, 46, 47 angeschlossen. Für eine automatische Arbeitsweise im Zusammenhang mit einer Bearbeitungsmaschine 49 und einer Ladeeinrichtung 48 besitzt der Auswertrechner Wirkverbindungen mit deren Steuerungen.

Die beschriebene Messeinrichtung ist vorzugsweise für das Prüfen und Messen von rotationssymetrischen Teilen konzipiert, wobei deren Durchmesser und Längen genau gemessen werden und Form und Messgenauigkeit von Radien, Anfasungen, Gewinden und Einstichen überprüft werden können. Bei diesen Teilen kann unter Einbeziehung des Drehantriebes auch die Rundheit, der Rundlauf und der Planlauf überprüft bzw. gemessen werden. Die Messung der Oberflächenrauheit ist mit dem Messverfahren ebenfalls möglich.

Die Distanz- von zwei Kanten 2 bzw. die Durchmessermessung eines Teiles in der X-Koordinate kann theoretisch mit einer reinen Zeilenmessung ohne Verschiebung in der Z-Achse erfolgen (wie zu Fig. 3 und 4 beschrieben). Zur Erhöhung der Messgenauigkeit erfolgt jedoch eine Verschiebung während der Messung. Zur Abstandsmessung zweier planen Schultern eines Teiles erfolgt die Massbestimmung durch Feststellung der Lage der Kante mittels des Beugungsbildes im Zusammenhang mit der Messsteuerung des numerischen Verschiebeantriebes. Zur Erzeugung eines Beugungsbildes in der Z-Achse müssen die Zeilensensoren während der Messung um einen Betrag verschoben werden. Das gleiche gilt für das Ausmessen von Radien, Fasen, Einstichen, Gewinden und der Oberflächenrauheit, wobei dann der Verschiebeweg über das Längenmass der zu messenden Kontur hinausgehen muss.

Selbstverständlich kann das zu der Fig. 1 und 2 beschriebene Messverfahren auch für nichtrotationssymetrische Teile verwendet werden, wobei dann die zu Fig. 6 beschriebene Einrichtung zur Aufnahme der entsprechenden Teile ausgebildet sein muss.

Werden verschmutzte Teile vor dem Messverfahren einer Reinigung, wie z. B. einem Flüssigkeitsbad und/oder einer Zentrifugalwirkung unterzogen, so kann der auf dem Teil haftende Restfilm eines Mediums in der Messung durch Kompensation berücksichtigt werden.

Durch gespeicherte Festprogramme im Rechner können zur Erhöhung der Genauigkeit weitere Parameter in der Berechnung der Lage der Kante aufgrund des Beugungsbildes berücksichtigt werden, wobei Korrekturen aufgrund folgender gemessener oder festgestellter Werte möglich sind:

Temperatur Werkstück/Umgebung

durch die gegebene Optik entstehendes Beugungsbild gegenüber dem theoretischen Beugungsbild

Ausprägung der Beugungsmaxima und -minima erlaubt einen Rückschluss auf die Oberflächenbeschaffenheit der Teile bzw. Messobjekte und ermöglicht die Bestimmung von Korrekturgrössen.

## Patentansprüche

1. Optisch-elektronisches Messverfahren zum Prüfen von Teilen, insbesondere von rotationssymetrischen Teilen, durch Erzeugung eines Beugungsbildes mittels einer kohärenten und monochromatischen Lichtquelle, wobei ein paralleler Lichtstrahl an mindestens einer Kante des zu prüfenden Teiles vorbeistreicht und das dabei erzeugte Beugungsbild hinter dem zu prüfenden Teil mittels mindestens einer Diodenzeile aufgenommen, in elektrische Signale umgewandelt und die Lage und/oder die Kontur der zu messenden Kante aus dem Beugungsbild rechnerisch ermittelt wird, dadurch gekennzeichnet, dass das Beugungsbild direkt mittels Zeilendioden aufgenommen wird, dass sich die aus Korrelation zwischen einem theoretisch berechneten bzw. durch Simulation gewonnenen Beugungsbild und des aufgenommenen Beugungsbildes ergebenden Grössen der Berechnung zugrunde gelegt werden, wobei die Maximal- und Minimalwerte der Lichtintensität des Beugungsbildes sowie deren Durchgangspunkte durch die mittlere Lichtintensität für die Berechnung ermittelt werden.

2. Verfahren nach Anspruch 1, dadurch gekennzeichnet, dass durch Erzeugung je eines Beugungsbildes an der oberen und unteren Kante eines Teiles dessen Distanzmass zwischen den Kanten bestimmt wird.

3. Verfahren nach einem der Ansprüche 1 oder 2, dadurch gekennzeichnet, dass die Verschieberichtung der Abtastzeile gegenüber der zu vermessenden Kante von der Parallelität leicht abweicht, womit bei nebeneinanderliegenden Auslesungen eine höhere Auflösung erreicht wird.

4. Verfahren nach einem der Ansprüche 1 bis 3, dadurch gekennzeichnet, dass zur Messung der Rundheit von Teilen oder bei einem auftretenden Störbild das Teil während oder zwischen den Messungen in Drehung versetzt wird.

5. Verfahren nach einem der Ansprüche 1 bis 4, dadurch gekennzeichnet, dass die Teile vor der Prüfung gereinigt werden, und dass der auf dem Teil haftende Restfilm eines Mediums in der Messung durch Kompensation berücksichtigt wird.

6. Optisch-elektronische Messeinrichtung zur Durchführung des Verfahrens nach einem der Ansprüche 1 bis 5 mit einer einen parallelen Lichtstrahl erzeugenden Laserlichtquelle (3), mit einem Zeilensensor (4) zur Aufnahme des an der Objektkante erzeugten Beugungsbildes und Umwandlung in elektrische Signale, welche einer mit einem Rechner versehenen Auswertung zugeleitet werden, wobei Lichtquelle und Zeilensensor relativ zum prüfenden Teil mittels eines messgesteuerten Verschiebeantriebes verschiebbar sind, dadurch gekennzeichnet, dass mehrere Zeilensensoren (4) in zwei Zeilenreihen hintereinander so angeordnet sind, dass eine gegenseitige Ueberlappung (13) mehrerer Dioden in Zeilenrichtung gegeben ist, dass jedem Zeilensensor (4) eine Laser-Lichtquelle (3) zugeordnet ist, wobei der parallele Lichtstrahl nach der Beugung durch die Objektkante direkt auf den Zeilensensor auftrifft, dass die Laser-Lichtquellen (3) und die Sensoren (4) auf einem Schlitten (22) angeordnet sind, welcher quer zum Zeilenverlauf der Sensoren (4) in Führungen (21) eines Gestells (20) verschiebbar ist, und dass die Aufnahmeeinrichtung für das zu prüfende Teil (1) einen mit einem Zustellantrieb (28) versehenen Reitstock (27) und einen mit Drehantrieb (31) versehenen Spindelstock (26) aufweist.

7. Einrichtung nach Anspruch 6, dadurch gekennzeichnet, dass die Auswerteinrichtung einen Messrechner (42) und einen Auswertrechner (43) aufweist, wobei die Zeilensensoren (4) über einen A/D-Wandler (41) und die Lichtquellen (3) über eine Messbereichssteuerung (40) mit den Rechnern (42, 43) wirkverbunden sind.

8. Einrichtung nach Anspruch 6 oder 7, dadurch gekennzeichnet, dass der Verschiebeantrieb (23) über eine Steuerung (44), der Drehantrieb (31) und der Zustellantrieb (28) mit den Rechnern (42, 43) wirkverbunden sind.

9. Einrichtung nach den Ansprüchen 6 bis 8, dadurch gekennzeichnet, dass ein Referenzkörper (34) im Verfahrbereich der Sensoren (4) angeordnet ist.

10. Einrichtung nach Anspruch 9, dadurch gekennzeichnet, dass der Referenzkörper (34) aus mehreren im Durchmesser unterschiedlichen Zylinderscheiben (35) besteht, wobei jedem durch die Anordnung der Zeilensensoren (4a, 4b, 4c, 4d) gegebenen Messbereich zwei unterschiedliche Referenzdurchmesser zugeordnet sind.

11. Einrichtung nach Anspruch 9 oder 10, dadurch gekennzeichnet, dass der Referenzkörper (34) zentrisch zur Spindelstockachse drehbar angeordnet und mittels dessen Drehantriebs (31) wahlweise antreibbar ist.

12. Einrichtung nach einem der Ansprüche 6 bis 11, dadurch gekennzeichnet, dass diese mit einer Abdeckhaube (36) zur Abschirmung äusserer Einflüsse wie z.B. Streulicht, Schmutz usw. versehen ist, wobei innerhalb der Abdekkung ein Ueberdruck erzeugbar ist.

13. Einrichtung nach einem der Ansprüche 6 bis 12, dadurch gekennzeichnet, dass Speicher- (45), Anzeige- (46) und Bedienungsgeräte (47) mit den Rechnern (42, 43) wirkverbunden sind.

14. Verwendung der Einrichtung nach einem der Ansprüche 6 bis 13 zur Messung von Durchmessern und Längenmassen sowie zur Prüfung der Form und Massgenauigkeit von Radien, Anfasungen, Gewinden und Einstichen an Teilen.

15. Verwendung nach Anspruch 14 zur Messung der Oberflächenrauheit von Teilen.

**Claims**

1. Opto-electronic measuring process for the testing of parts, particularly of rotationally-symmetrical parts, by production of a diffraction pattern by means of a coherent and monochromatic light source, in which a parallel light beam makes tangential contact with at least one edge of the part to be tested and the diffraction pattern so produced is received behind the part to be tested by means of a row of diodes, converted into an electrical signal and the position and/or the contour of the edge to be measured is computed from the diffraction pattern, characterised in that the diffraction pattern is detected directly by means of diode rows, that the calculation is based upon correlation between the quantities of calculation of a diffraction pattern which is theoretically calculated or established by simulation and those of the measured diffraction pattern, in which the maximum and minimum values of the light intensity of the diffraction pattern as well as their crossover points through the mean light intensity are ascertained for the computation.

2. Process according to claim 1, characterised in that, by production of respective diffraction patterns on the upper and lower edges of a part, the distance measurement between the edges is calculated.

3. Process according to either of claims and 2, characterised in that the direction of movement of the scanning line relative to the edge to be measured deviates slightly from parallelism, so that, with neighbouring signal readings, a higher resolution is achieved.

4. Process according to any of claims 1 to 3, characterised in that, for measurement of the roundness of parts or with an interference pattern occurring, the part is rotated during or between the measurements.

5. Process according to any of claims 1 to 4, characterised in that the parts are cleaned before the testing and that the remaining film of a medium adhering to the part of a medium is taken into account in the measurement by compensation.

6. Opto-electronic measuring device for carrying out the process of any of claims 1 to 5 with a laser light source (3) producing a parallel light beam, with a sensor line (4) for reception of the diffraction pattern produced at the edge of the object and conversion into electrical signals, which are subjected to analysis provided with a computer, in which the light sources and line sensors are movable relative to the tested part by means of a measurement-controlled sliding drive, characterised in that a plurality of line sensors (4) are arranged in two rows behind one another, that mutual overlapping of several diodes in the direction of the row is produced, that each sensor line (4) is associated with a laser light source (3), where the parallel light beam, after diffraction by the edge of the object impinges directly on the sensor line, that the laser light source (3) and the sensors (4) are arranged on a carriage (22) which is moveable transversely of the direction of the row of the sensors (4) in guides (21) on a support (20) and that the detector device for the part to be tested (1) has a tailstock provided with a positional drive (28) and a headstock provided with a rotational drive (31).

7. Apparatus according to claim 6, characterised in that the analysis apparatus has a measurement computer (42) and an analysis computer (43), where the sensor lines (4) are in operative connection with the computers (42, 43) through an A/D converter (41) and the light sources (3) through a measurement range control (40).

8. Apparatus according to claim 6 or 7, characterised in that the sliding drive (23), by way of a control (44), the rotational drive (31) and the positional drive (28) are in operative connection with the computers (42, 43).

9. Apparatus according to claims 6 to 8, characterised in that a reference body (34) is arranged in the range of movement of the sensors (4).

10. Apparatus according to claim 9, characterised in that the reference body comprises several cylindrical discs (35) of different diameters, where each measuring range is associated with two different reference diameters through the arrangement of sensor lines (4a, 4b, 4c, 4d).

11. Arrangement according to claim 9 or 10, characterised in that the reference body (34) is rotatably arranged centrally of the headstock axis and is selectively drivable by means of its rotational drive (31).

12. Apparatus according to any of claims 6 to 11, characterised in that it is provided with a covering hood (36) for exclusion of external influences, e. g. stray light, dirt, etc., where an overpressure is producable inside the cover.

13. Apparatus according to any of claims 6 to 12, characterised in that storage (45), recording (46) and control (47) apparatus are operatively connected with the computers (42, 43).

14. Use of the apparatus according to any of claims 6 to 13 for the measurement of diameters and length measurement, as well as for the testing of the shape and measurement accuracy of radii, chamfers, threads and recesses in workpieces.

15. Use according to claim 14, for the measuring of the surface roughness of parts.

**Revendications**

1. Procédé de mesure opto-électronique pour contrôler des pièces, notamment des pièces de révolution, par création d'une image de réfraction à l'aide d'une source de lumière cohérente et monochromatique, procédé dans lequel un faisceau lumineux parallèle passe le long d'au moins un des bords de la pièce à contrôler, et dans lequel l'image de réfraction ainsi créée est enregistrée derrière la pièce à contrôler, au moyen d'au moins une rangée de diodes, cette image de réfraction étant alors convertie en signaux électriques et la position et/ou le profil du bord à mesurer étant déterminés par calcul à partir de ladite image de réfraction, caractérisé en ce que ladite image de réfraction est enregistrée directement partir de diodes alignées, en ce que les valeurs résultant de la corrélation entre une image de réfraction calculée ou obtenue par simulation et l'image de réfraction effectivement enregistrée, sont utilisées comme base de calcul, les valeurs maxima et minima de l'intensité lumineuse de l'image de réfraction, ainsi que leurs points de passage par l'intensité lumineuse moyenne étant déterminés pour permettre le

calcui.

2. Procédé selon la revendication 1 caractérisé en ce qu'en produisant des images de réfraction respectives se rapportant, au bord supérieur et au bord inférieur d'une pièce, on détermine la distance entre lesdits bords supérieur et inférieur.

3. Procédé selon l'une des revendications 1 et 2 caractérisé en ce que la direction des déplacements de la rangée de balayage est presque parallèle au bord à mesurer ou contrôler, de manière à obtenir une meilleure résolution lors du relevé de valeurs voisines.

4. Procédé selon l'une quelconque des revendications à 3 caractérisé en ce qu'en vue de mesurer ou contrôler la forme circulaire d'une pièce ou à l'apparition d'une image parasite, on fait tourner la pièce à contrôler pendant ou entre les opérations de mesure successives.

5. Procédé selon l'une quelconque des revendications 1 à 4 caractérisé en ce que l'on nettoie les pièces à contrôler avant les opérations de contrôle et en ce que la pellicule résiduaire adhérant à la pièce intéressée d'un fluide est prise en compte dans la mesure, par des opérations de compensation.

6. Dispositif de mesure opto-électronique pour la mise en œuvre du procédé selon l'une quelconque des revendications 1 à 5, comportant une source de lumière laser (3) produisant un faisceau lumineux parallèle, un capteur à alignements (4) pour enregistrer l'image de réfraction produite sur un bord de la pièce à contrôler et pour transformer cette image en signaux électrique, qui sont transmis à un dispositif d'exploitation comportant un calculateur, dans lequel ladite source de lumière et le détecteur à alignements sont disposés de manière déplaçable par rapport à ladite pièce à contrôler au moyen d'un mécanisme de commande de déplacement actionné en fonction des données à mesurer, caractérisé en ce qu'une pluralité de détecteurs alignés (4) sont disposés en deux rangées successives de façon telle qu'une pluralité de diodes soit placée en recouvrement réciproque (13) dans la direction des rangées, en ce que chacun des détecteurs alignés (4) est associé à une source lumière laser (3), le faisceau lumineux parallèle rencontrant, après la réfraction par le bord de la pièce à contrôler, directement le détecteur aligné, en ce que les sources de lumière laser (3) et les détecteurs (4) sont disposés sur un coulisseau (22) qui est susceptible de se déplacer transversalement à l'orientation des rangées de détecteurs (4) sur des glissières de guidage (21) d'un bâti (20), et en ce que le dispositif recevant la pièce à contrôler (1) comporte une contre-pointe (27) associée à un mécanisme de commande d'avance (28), ainsi qu'une broche (26) associée à un mécanisme d'entraînement en rotation (31).

7. Dispositif selon la revendication 6 caractérisé en ce que les moyens d'exploitation comportent un calculateur de mesure (42) et un calculateur d'exploitation (43), et les détecteurs alignés (4) étant reliés en service auxdits calculateurs (42, 43) par un convertisseur analogique-numérique (41) et les sources lumineuses (3) étant reliées à ces mêmes calculateurs (42, 43) par un dispositif de commande déterminant la plage de mesure (40).

8. Dispositif selon la revendication 6 ou 7 caractérisé en ce que le mécanisme de déplacement (23) est relié en service par un mécanisme de commande (44) au calculateurs (42, 43), qui sont également reliés au mécanisme de commande ou d'entraînement en rotation (31) et au mécanisme de commande d'avance (28).

9. Dispositif selon les revendications 6 à 8 caractérisé en ce qu'un corps de référence (34) est disposé dans la plage de déplacement des détecteurs (4).

10. Dispositif selon la revendication 9 caractérisé en ce que ledit corps de référence (34) est constitué par une pluralité de disques cylindriques (35) présentant des diamètres différents, chaque plage de mesure définie par la disposition des détecteurs alignés (4a, 4b, 4C, 4d) étant associée à deux diamètres de référence différents.

11. Dispositif selon la revendication 9 ou 10 caractérisé en ce que le corps de référence (34) est monté à rotation de manière centrée par rapport à l'axe de la broche précité, en étant susceptible d'être entraîné sélectivement en rotation au moyen du mécanisme d'entraînement (31) de ladite broche.

12. Dispositif selon l'une quelconque des revendications 6 à 11 caractérisé en ce qu'il comporte un capot (36) pour protéger ledit dispositif contre des influences extérieures telles que la lumière parasite, les impuretés etc., l'intérieur de ce capot étant le cas échéant maintenu en surpression.

13. Dispositif selon l'une quelconque des revendications 6 à 12 caractérisé en ce que les calculateurs (42, 43) sont liés fonctionnellement à des moyens de mémoire (45), d'indication (46) et de commande (47).

14. Application du dispositif selon l'une quelconque des revendications 6 à 13 pour mesurer des diamètres et des longueurs, et pour contrôler la configuration et la précision dimensionnelle de rayons, chanfreins, filetages et saignées, prévus sur les pièces à contrôler.

15. Application selon la revendication 14 à la mesure de la rugosité de pièces à contrôler.

EP 0 185 167 B1

Fig.1

Fig.2

Fig.3

Fig.4

1

# Fig.5

# Fig.6

EP 0 185 167 B1